# EUROPEAN PATENT SPECIFICATION

(11) **EP 4 272 532 B1**
(45) Date of publication and mention of the grant of the patent: **21.08.2024**
(21) Application number: 23171426.2
(22) Date of filing: 03.05.2023
(51) Int. Cl.: A01C 17/00

(54) **CENTRIFULGAL SPREADER**
ZENTRIFUGALSTREUER
ÉPANDEUR CENTRIFUGE

(30) Priority: 03.05.2022 IT 202200008939
(43) Date of publication of application: 08.11.2023
(73) Proprietor: Dal Cero Metalworking S.n.c. di Dal Cero Sergio & Diego, 37030 Ronca' (VR) (IT)
(72) Inventor: DAL CERO, Sergio, 37030 Ronca' (VR) (IT); DAL CERO, Diego, 37030 Ronca' (VR) (IT)
(74) Representative: Caldon, Giuliano

(56) References cited:
- EP-A1- 3 571 914
- EP-B1- 2 301 316
- DE-A1- 10 033 674
- DE-A1- 102007 027 317
- DE-A1- 102007 045 905
- US-A1- 2020 000 019

## Description

### Field of application

The present invention regards farm machinery for the distribution of products for treating a terrain and a method for operating said farm machinery.

The farm machinery and the present method are inserted in the field of agriculture, for example in the field of cultivation of vineyards, orchards and in plots of land even of reduced size, e.g. a hectare.

In particular, the farm machinery and the present method are advantageously intended to be employed for distributing, in a precise manner, a quantity of products for treating the ground, such as for example compost, fertilizers, or additives that are functional for the ground, e.g. poisons and fungicides.

Therefore, the present machinery is inserted in the industrial field of production of farm machines for treating a terrain.

### State of the art

Known are farm machines for spreading treatment products, e.g. compost or fertilizers, on the ground. Such machines allow automatically distributing a measured dose of product on the ground to be treated during the running thereof, in particular by exploiting the principle of centrifugal distribution in order to quickly treat even large plots of land. Several examples of such farm machines are described in the documents EP 3571914 A1 and US 2020/000019 A1. More in detail, such farm machines are known as centrifugal machines and are provided with a containment tank for containing the product to be distributed, which is provided with a dispensing opening in order to allow the outflow of the product to be distributed, and centrifugal distribution means, adapted to receive the product exiting from the tank in order to distribute it on the ground to be treated.

In particular, the distribution means comprise a spreader plate, placed below the dispensing opening and on which at least one distribution blade is mounted, integral with the spreader plate and actuatable to rotate so as to laterally distribute, on the ground, the product exiting from the containment tank.

The machines of known type also comprise a metering plate, which is positioned across from the dispensing opening of the containment tank and is movable, for example by means of an electric actuator, between different discrete operating positions, in each of which placed to partially close the dispensing opening itself, so as to vary the "free" section of the dispensing opening and thus adjust the flow rate of product that is dispensed and distributed on the ground. The metering plate must indeed be placed in the correct operating position so as to obtain the correct flow rate of product to be distributed on the ground. Such flow rate must be previously calculated and depends on numerous operating parameters, such as for example the advancing speed of the machinery, the width of distribution (or of progress on the ground), the quantity and the physical characteristics of the product to be distributed, the ground type etc.

More in detail, each operating position of the metering plate corresponds to a specific flow rate of distributed product, such to determine a metering curve position-specific flow rate based on the aforesaid dependance of the product flow rate on the position of the metering plate.

The farm machines described up to now have in practice proven that they do not lack drawbacks. A first drawback is given from the fact that the aforesaid farm machines have proven to have poor precision in the dose to be distributed, in particular in the case of reduced advancing speeds of the machinery or in the case of reduced metering and work widths.

The metering curve that is obtained with the metering plate of the machines of known type is indeed extremely "steep" and therefore imprecise, since a small movement of the metering plate (e.g. between two consecutive operating positions) corresponds with a high increase of the flow rate of product distributed on the ground.

Therefore, the farm machines of known type have proven unsuitable for carrying out treatments that are precise and reproducible over time, above all in the event in which the product to be distributed requires low metering (in particular lower than 15 kg/min), such as for example in the case of fungicide products, or in the case of reduced advancing speeds (e.g. smaller than 8 km/h) or in the case of rows in which the quantity of product to be distributed is reduced with respect to the open field.

The poor precision of the machines of known type can lead on one hand to an over-metering of the product to be distributed, and on the other hand to under-metering the same product, with different risks for the terrain and for the cultivation therein, but in any case with consequences that determine the ineffectiveness of the treatment.

Such drawbacks bring such machines of known type to be unsuitable for modem farming needs, in which the increasingly stringent regulations impose the observance of precise requirements for the metering of products for treating terrains, in particular in the case of fungicide and pesticide products.

A further drawback is given of course by the fact that in case of over-metering of the product to be distributed, a waste of product is verified together with a consequent increase of costs for the user.

The document DE 102007045905 A1 describes further farm machinery of known type which comprises a containment tank for the farming product provided, on its bottom, with a dispensing opening, and closure means placed below the bottom of the tank. In particular, such closure means comprise two rotatable regulation lates, one placed above the other, and each provided with different through openings, which are selectively positionable below the dispensing opening of the tank in order to set the quantity of product to be dispensed. Also the latter solution of known type is unable to completely resolve the abovementioned problems, in particular during the operation of the farm machinery.

### Presentation of the invention

In this situation, the problem underlying the present invention is therefore that of overcoming the drawbacks manifested by the abovementioned solutions of known type by providing farm machinery for distributing treatment products on the ground, which allows distributing the aforesaid products in a precise and reproducible manner, even in the case of low requested metering.

A further object of the present invention is to provide farm machinery for distributing treatment products on the ground which is capable of operating in a completely efficient and versatile manner as a function of the different operating parameters.

A further object of the present invention is to provide farm machinery for distributing treatment products on the ground which is entirely reliable in operation.

A further object of the present invention is to provide farm machinery for distributing treatment products on the ground which is simple and inexpensive to attain.

### Brief description of the drawings

The technical characteristics of the present invention, according to the aforesaid objects, can be seen in the contents of the below-reported claims and the advantages thereof will be more evident in the following detailed description, made with reference to the enclosed figures, which represent a merely exemplifying and non-limiting embodiment of the invention in which:
- figure 1 shows a top perspective view of the farm machinery object of the invention;
- figure 2 shows a further top perspective view of a detail of the farm machinery, object of the invention, relative to a tank for the containment, with several parts removed for better illustrated other parts;
- figure 3 shows a bottom perspective view of the tank of figure 2;
- figure 4 shows a section view of a detail of the tank of figure 2, relative to closure means and to a dispensing opening, with a regulation plate in a first position;
- figure 5 shows a further section view of a detail of the tank of figure 2, relative to a metering plate and with the regulation plate removed;
- figure 6 shows a frontal detail of the regulation plate of figure 4;

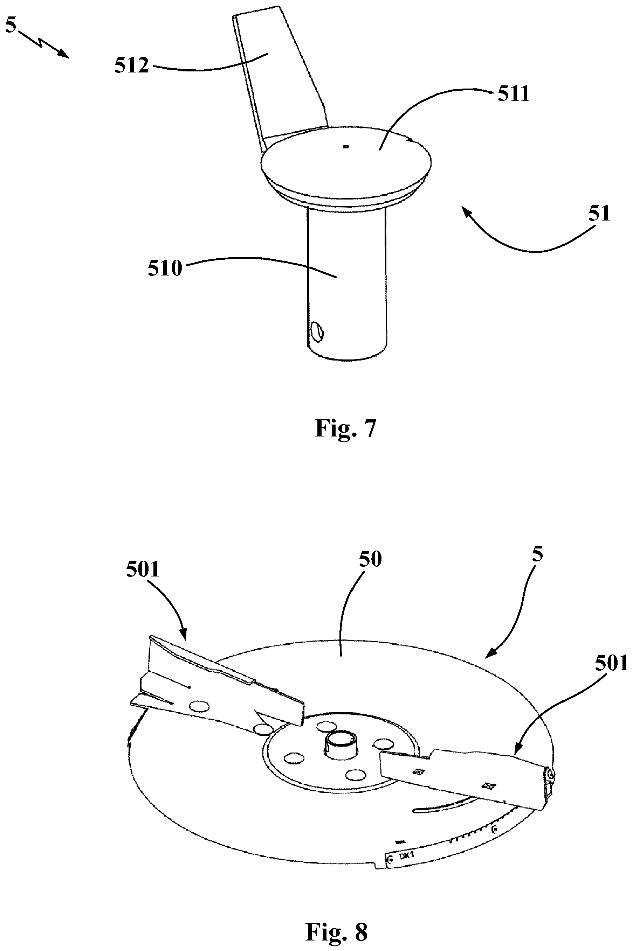

- figure 7 shows a perspective view of a detail of distribution means of the treatment product of the ground, relative to a mixer body;
- figure 8 shows a perspective view of a further detail of distribution means of the treatment product of the ground, relative to a spreader plate.
- figure 9 shows a graph on which two metering curves are represented for a treatment product to be distributed on a terrain, associated with two corresponding through openings of the regulation plate.

### Detailed description of several preferred embodiments

Reference number 1 overall indicates farm machinery for distributing treatment products on the ground, in accordance with the present invention.

For such purpose, the machinery 1 is advantageously connectable to a drive unit, not illustrated in the enclosed figures, for example by means of a power takeoff, in particular a three-point hitch, so as to allow its movement along the terrain to be treated.

In particular, the farm machinery, object of the invention, is advantageously employable in order to distribute different products for treating the terrain, such as for example compost, fertilizers, functional additives such as for example poisons and fungicides, or seeds of various kind.

The abovementioned products are advantageously in solid form and can be in the form of granules, pellets etc. as described more in detail hereinbelow.

More in detail, the present machinery 1 is intended to be employed in the farming field, and in particular in the field of terrain cultivation, both reduced-size terrain like vineyards and orchards, and larger-size terrain such as for example in an open field.

As will be obvious to the man skilled in the art, such present machinery 1 can be employed for further applications, regardless of the type of terrain to be treated, since it can be for example intended as employable as salt spreader.

As better described hereinbelow, the machinery 1, object of the invention, is preferably machinery of electronic type, i.e. adapted to be electronically programmed in order to allow a high automation of the working on the ground and thus increase the productivity and the efficiency of the machinery itself.

The farm machinery, object of the present invention, is indeed advantageously employable in all those contexts in which a high metering precision is necessary, for example in the case of reduced extension terrain (e.g. vineyards or orchards in which the sowing width can even reach 2 mt), or in the event in which it is necessary to spread products with reduced metering (preferably smaller than 120 kg/ha, such as for example poisons or fungicides) or in the event in which it is necessary or desired to move the machinery itself at reduced advancing speeds (preferably lower than 8 km/h).

The farm machinery 1 for distributing treatment products on the ground, object of the invention, comprises a support frame 2 and at least one tank 3, fixed to the support frame 2 and adapted to contain products to be distributed on the ground, and provided with at least one dispensing opening 31 of the products to be distributed.

The farm machinery 1 also comprises distribution means 5, mechanically connected to the support frame 2 and placed below the dispensing opening 31 of the tank 3 and comprising at least one spreader plate 50 which is intended to receive the dose of the products from the tank 3 and is actuatable to rotate in order to distribute the dose of products on the ground.

The farm machinery 1 also comprises closure means 4, mechanically connected to the external surface of the tank 3 at the dispensing opening 31 and comprising at least one metering plate 41, which is provided with an external perimeter edge having at least one shaped section.

In particular, the perimeter edge of the metering plate 41 defines the external perimeter of the latter, delimiting in particular the area of the metering plate 41 itself.

The metering plate 41 is movable between multiple operating positions in which it is placed with the shaped section to at least partially close the dispensing opening 31, in order to allow the dispensing of corresponding predetermined doses of the products from the tank 3.

According to the idea underlying the present invention, the closure means 4 comprise at least one regulation plate 42, which is interposed between the metering plate 41 and the tank 3, is mechanically connected to the latter, is provided with at least one first through opening 401 and at least one second through opening 402 and the regulation plate 42 is movable between at least one first position, in which the first through opening 401 is placed at the dispensing opening 31 of the tank 3 and the shaped section of the metering plate 41 is placed to at least partially close the first through opening 401, and a second position, in which the second through opening 402 is placed at the dispensing opening 31 of the tank 3, and the shaped section of the metering plate 41 is placed to at least partially close the second through opening 402.

Advantageously, in each operating position of the metering plate 41, the shaped section of its perimeter edge defines, with the first through opening 401 in the aforesaid first position or with the second through opening 402 in the aforesaid second position, a corresponding different passage section (of different dimensions), through which the product to be distributed is susceptible of passing.

In particular, in the different operating positions, the metering plate 41, by means of the shaped section of its perimeter edge, covers corresponding different areas of the first or second through opening 401, 402, in this manner defining corresponding passage sections of different dimensions.

Preferably, when the second through opening 402 is placed at the dispensing opening 31, the projection of the second through opening 402 is totally contained within the same dispensing opening 31.

Advantageously, the dispensing opening 31 is made on a side of the tank 3, in particular on a lateral wall 33 thereof, which will be described in detail hereinbelow.

In particular, when the first through opening 401 is placed at the dispensing opening 31 of the tank 3, the second through opening 402 is placed against the lateral wall 33 of the tank 3 so as to be closed and thus prevent the passage of product to be distributed.

In the same manner, when the second through opening 402 is placed at the dispensing opening 31 of the tank 3, the first through opening 401 is placed against the lateral wall 33 of the tank 3 so as to be closed and thus prevent the passage of product to be distributed.

The machinery 1, object of the invention, therefore allows advantageously distributing the products through the dispensing opening 31 and an opening selected between the first through opening 401 and the second through opening 402, as a function of the different distribution operating parameters, such as for example the width of the ground to be treated, the advised metering of the product to be distributed, the advancing speed of the machinery etc...

The farm machinery 1 therefore advantageously allows metering, in a precise and reproducible manner, the product to be distributed even in the event in which the product or the operating conditions require low metering.

More in detail, the farm machinery 1, object of the invention, allows using the different through openings 401, 402 made on the regulation plate 42 so as to select a different metering curve as a function of the different operating conditions, as better described hereinbelow.

As set forth above, such embodiment solution is particularly advantageous in the case of use on electronic machinery, in which the metering plate 41 is continuously moved by an actuator, as better described hereinbelow, as a function of the variation of the operating conditions (for example as a function of the speed of the machinery 1 or of the position of the machinery on the field, in particular detected by means of a GPS).

In such case indeed the movement of the metering plate 41 even more increases the risks of over-metering or under-metering of the product to be distributed with the above-described disadvantages.

Therefore, even if the present machinery 1 is employable in a preferred embodiment as machinery of "electronic" type and in an alternative embodiment also as machinery of "manual" type, this was specially designed for being employed in its electronic configuration, in which therefore the metering plate 41 is automatically movable even during the movement of the machinery 1 on the field.

In both cases, the first through opening 401 advantageously defines a first passage section for the outflow of the products from the tank 3 and the second through opening 402 defines a second passage section for the outflow of the products from the tank 3. Advantageously in addition, the second passage section is smaller than the first passage section.

Therefore, given the same product to be distributed, the first through opening 401 is configured for dispensing a greater quantity of product with respect to the second through opening 402.

The metering plate 41 is movable along a movement trajectory S between the different operating positions.

More in detail, the metering plate 41 is advantageously movable along the aforesaid movement trajectory S between at least one operating position with maximum dispensing, in which it is placed distal from the selected through opening 401, 402 (positioned across from the dispensing opening 31) so as to allow the maximum outflow of product to be distributed, and an operating position with minimum dispensing, in which it is placed across from the selected through opening 401, 402 and preferably placed substantially to close the entire opening in order to dispense a reduced dose of product.

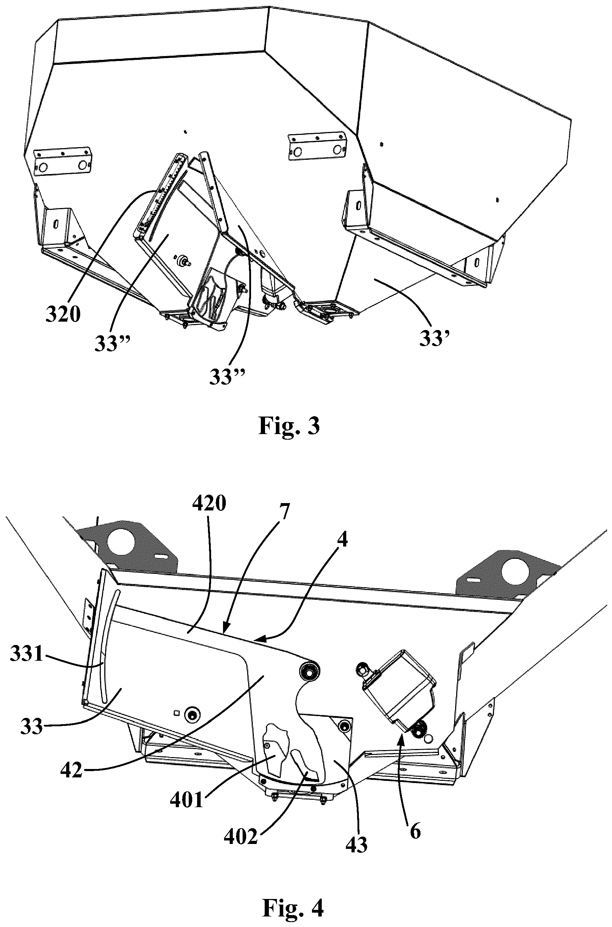

In accordance with the preferred embodiment variant of the machinery 1, illustrated in figure 4, the metering plate 41 is pivoted to the tank 3, preferably to the same lateral wall 33, around a center of rotation C, and is rotatably connected to the latter around a first rotation axis R. Advantageously, the movement trajectory S is extended therefore circumferentially with respect to the center of rotation C, preferably along an arc of circumference between the different operating positions.

Of course, without departing from the protective scope of the present invention, the movement trajectory S can be rectilinear, curvilinear or a broken trajectory, and therefore also the metering plate 41 can be movable in only one direction, whether this is horizontal or vertical along the wall of the tank 3 on which the dispensing opening 31 is made.

Advantageously, the farm machinery 1 comprises a guide plate 43, fixed to the tank 3 and interposed between the tank 3 and the regulation plate 42.

Advantageously, the guide plate 43 is provided with an opening counter-shaped to the first through opening 401 and the guide plate 43 is mechanically fixed to the tank 3 in a manner such that the aforesaid opening is superimposed on the dispensing opening 31.

Advantageously, the guide plate 43 is provided with a guide surface along which the metering plate 41 is susceptible of sliding during its movement along the movement trajectory S and preferably also the regulation plate 42 during its movement between the first and the second position.

Advantageously, the guide plate 43 comprises a fixing wall 431, which is parallel to the lateral wall 33 of the tank 3 and is abuttingly fixed on the latter, a slide wall 432, which is orthogonal to the fixing wall and defines the aforesaid guide surface, and, preferably, a retention wall 430, substantially parallel to the fixing wall 431 and defining, with the slide wall 432 and the fixing wall 431, a slide channel, along which the metering plate 41 and, preferably, also the regulation plate 42 slides.

Advantageously, the retention wall 430 cooperates with a portion of the metering plate 41 in order to retain the latter adjacent to the dispensing opening 31. In this manner, it is possible to prevent the weight exerted by the treatment product from within the tank 3 from pushing against the metering plate 41, moving it away from the guide plate 43, allowing the product to exit through zones of the dispensing opening 31 which normally must be covered.

Advantageously, in accordance with the aforesaid preferred embodiment variant, the slide wall 432 and the slide channel of the guide plate 43 are counter-shaped with respect to the movement trajectory S, and in particular they are extended circumferentially with respect to the center of rotation C.

Advantageously, the first through opening 401 is extended with a first component Y, which is extended orthogonally with respect to the movement trajectory S, and with a second component X, which is extended parallel to the movement trajectory S. Advantageously, the second through opening 402 is extended with a third component Y', which is extended orthogonally with respect to the movement trajectory S, and with a fourth component X', which is extended parallel to the movement trajectory S.

Preferably, the first component Y is parallel to the third component Y' and the second component X is parallel to the fourth component X'.

In particular, in the event in which the movement trajectory S is circular, the aforesaid relations with the components Y, X, Y', X' of the through openings 401, 402 are defined with respect to the line tangent to the movement trajectory S in the point of intersection with each of such components Y, X, Y', X'.

Advantageously in addition, the ratio between the fourth component X' and the third component Y' of the second through opening 402 is greater than the ratio between the second component X and the first component Y of the first through opening 401.

In other words, the second through opening 402 is extended more parallel to the movement trajectory S than the first through opening 401, so as to allow a more gradual closure of the second through opening 402 during the movement of the metering plate 41 along the movement trajectory S.

As set forth above, the farm machinery 1, object of the invention, allows selecting a different metering curve as a function of the different operating conditions.

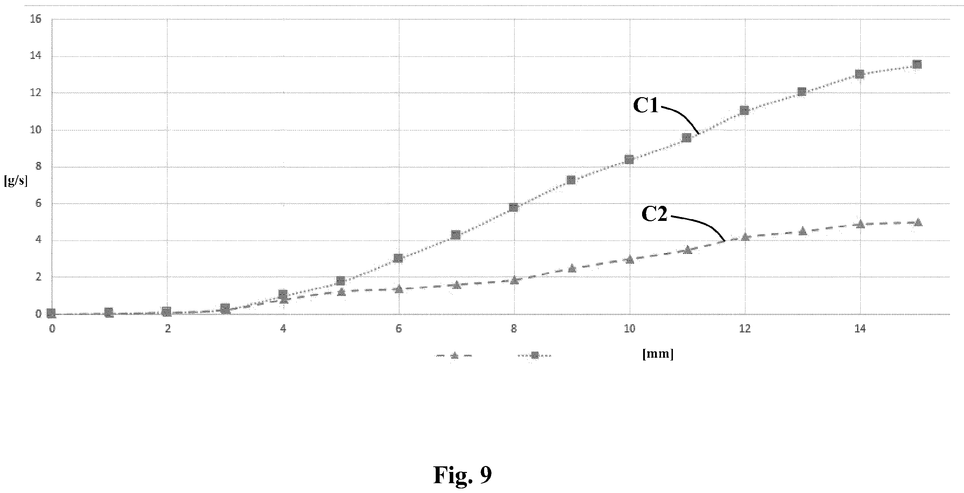

More in detail, as is visible from figure 9, each through opening corresponds with a different metering curve, where hereinbelow with the expression "metering curve" it will be intended a function that allows describing the dependence of the flow rate (e.g. expressed in grams per second) of the product to be distributed as a function of the movement (e.g. expressed in mm) of the metering plate 41 along the movement trajectory S.

In particular, the first through opening 401 is associated with a first metering curve C1 while the second through opening 402 is associated with a second metering curve C2.

Preferably, the first through opening 401 and the second through opening 402 are shaped in a manner such that the first metering curve C1 and the second metering curve C2, for at least one section thereof, have a monotonic progression with gradual variations, in particular approximately linear and, still more particularly, substantially associable with a line.

In accordance with the preferred embodiment in which the first through opening 401 is provided with a passage section greater than the passage section of the second through opening 402, the second metering curve C2 is provided with a lower angular coefficient (resulting flatter and less steep). This involves a lower sensitivity of the flow rate of dispensed product as a function of the movement of the metering plate 41, which allows obtaining a more precise regulation of the flow rate of dispensed product with the variation of the movement of the metering plate 41 itself between the different operating positions.

Advantageously, the second metering curve C2 is particularly advantageous in the case of reduced flow rates of product, e.g. comprised between 20 g/s and 400 g/s.

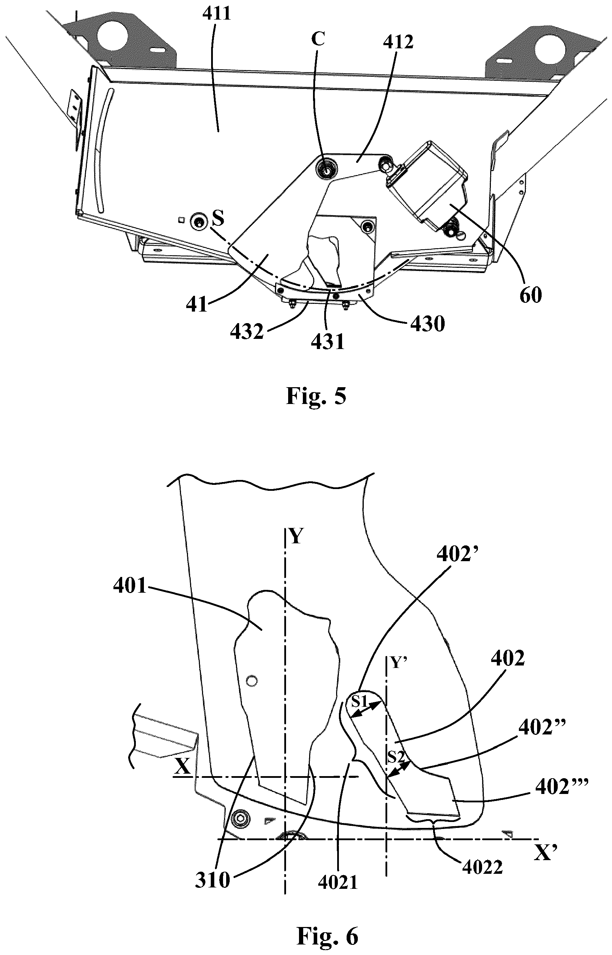

In accordance with the preferred embodiment illustrated in figure 6, the second through opening 402 is extended for a first section 4021, provided with a main extension along the third component Y', and for a second section 4022, transverse with respect to the first section 4021 and provided with a main extension along the fourth component X'.

More in detail, in accordance with the aforesaid preferred embodiment, the second opening 402 has a form that is substantially L shaped, in which the first section 4021 of the second through opening 402 constitutes the vertical leg of the L, and is preferably oriented diagonally according to an angle comprised between -20° and -45°, and the second section 4022 of the second through opening 402 constitutes the horizontal leg of the L.

More in detail the first section 4021 of the second through opening 402 is extended, preferably with a substantially constant width, between a rounded first end 402' and a second end 402" for joining with the second section 4022. Alternatively, the first section 4021 is provided with a first section S 1 starting from the first end 402', and a second section S2, narrow with respect to the first section S1, starting from the second end 402", and the second section 4022 is extended advantageously between the second junction end 402" and an opposite third end 402"'.

Preferably, at the third end 402‴ the second section 4022 is provided with a triangular form, in order to ensure a minimum outflow of product in case of position close to the total closure by the metering plate 41.

Advantageously, the metering plate 41 in its movement along the movement trajectory S first intercepts the first section 4021 of the second through opening 402 and subsequently the second section 4022 of the second through opening 402.

Advantageously, during the rotation from the first operating position to the second operating position, the metering plate 41 first intercepts the first end 402' of the first section 4021 of the second through opening 402.

Advantageously, as set forth above, the metering plate 41 is provided with a perimeter edge having at least one shaped section. Optionally, the perimeter edge of the metering plate 41 can also comprise two opposite shaped sections adapted to be placed to at least partially close the dispensing opening in corresponding different operating positions.

With the expression "shaped section" it will be intended hereinbelow the section of perimeter edge of the metering plate 41 adapted to be placed to partially close the respective through openings 401, 402.

In particular, the perimeter edge is extended along an extension direction substantially orthogonal to the movement trajectory S preferably for an extension greater than the extension of the metering plate 41 along the first extension direction Y (and hence even greater than the extension of the regulation plate 42 along the third extension direction Y'). Advantageously, therefore, with a movement of the metering plate 41 along the aforesaid movement trajectory S, the shaped section will determine the closure of a greater surface area on the first through opening 401 with respect to the second through opening 402 (of course given the same movement).

On the contrary, during the movement of the metering plate 41 from the operating position with minimum dispensing towards the operating position with maximum dispensing, the metering plate 41 first frees the second section 4022 of the second through opening 402 and subsequently the first section 4021.

Advantageously as set forth above the second section 4022 is provided with a main extension along the fourth component X', so as to allow a gradual increase of the flow rate of dispensed product, thus preventing sudden over-metering of product and and hence allowing the regulation with greater precision of the exiting product flow rate.

As set forth above, the first through opening 401 has a lower ratio between the second component X and the first component Y with respect to the second through opening 402 and in other words the first through opening 401 has an extension more greatly oriented along the first component Y. In particular, the first through opening 401 is elongated and has an extension mainly along such first component Y.

More in detail, the first through opening 401 has an irregular parallelepiped form, and is advantageously delimited by a base section, preferably rectilinear and which is placed substantially horizontally when the first through opening 401 is placed at the dispensing opening 31.

The first through opening 401 is also advantageously delimited by two oblique sides 310 which define a substantially trapezoidal lower portion on the first through opening 401. In addition, advantageously, the first through opening 401 is delimited on the upper part by an irregular edge, substantially curvilinear which defines an irregular upper portion on the first through opening 401, preferably provided with an extension greater than the trapezoidal lower portion. Preferably, the dispensing opening 31 is counter-shaped with respect to the first through opening 401, so as to allow the correct dispensing of the product to be distributed without this being blocked against the regulation plate 42 or laterally exiting from the latter. Advantageously, the farm machinery 1 comprises first movement means 6, fixed (in particular in a non-rigid manner, i.e. generally connected) to the tank 3, preferably mounted on the lateral wall 33 of the latter, and such movement means 6 are mechanically connected to the metering plate 41 in order to move it along the movement trajectory S.

As set forth above, the machinery 1 is preferably a machinery of electronic type, in which the metering plate 41 is movable during the movement of the machinery 1 on the field in order to instantaneously adjust the metering as a function of different operating parameters, such as for example the speed of the machinery 1 and its position on the field.

For such purpose, the first movement means 6 advantageously comprise at least one actuator 60 (e.g. an electric actuator, hydraulic actuator or pneumatic actuator) mechanically connected to the metering plate 41.

Of course, in the event in which the machinery 1 is of "manual" type the actuator 60 will be a manual actuator, e.g. a lever, which is manually positionable by a user in a predetermined position before starting the working of the machinery 1. In such case, of course, the metering plate 41 is not regulated during the spreading of the product with the machinery 1.

The actuator 60 is preferably an actuator of linear type which in a per se known manner comprises a fixed body, fixed (preferably in a non-rigid manner, e.g. rotatable) to the tank 3, and a movable stem slidably associated with the fixed body and fixed (preferably in a non-rigid manner, e.g. rotatable) to the metering plate 41 in order to move it along the movement trajectory S.

More in detail, in accordance with the preferred embodiment in which the metering plate 41 is pivoted on the tank 3 at a center of rotation C, the metering plate 41 comprises a closure portion 411 and a movement portion 412, placed opposite the closure portion 411 with respect to the center of rotation C.

Advantageously the first movement means 6, and in particular the movable stem of the actuator 60 are fixed (preferably in a non-rigid manner, e.g. rotatable) to the movement portion 412 in order to allow the movement of the metering plate 41 along the movement trajectory S, in particular by means of the rotation of the metering plate 41 around the first rotation axis R. Advantageously, the actuator 60 is an electric actuator provided with a travel sensitivity of at least 2 mm and preferably of about 0.5 mm. Preferably, the metering plate 41 is configured such that the linear movement of the actuator 60, e.g. for a travel of 50 mm, determines a rotation of the closure portion 411 by an angle preferably comprised between 25° and 35°.

In this manner, the actuator 60 of the movement means 6 therefore allows a quick and precise adjustment of the position of the metering plate 41 during the distribution of the treatment product, limiting the metering errors.

Advantageously, the farm machinery 1 comprises second movement means 7, mechanically connected to the regulation plate 42 in order to move it between the first position and the second position. In particular, the second movement means 7 can be of automatic type, e.g. comprising a second electric actuator, pneumatic actuator or hydraulic actuator (preferably linear) or they can be of manual type, i.e. manually actuatable by a user so as to move the regulation plate 42 between the aforesaid first and second position.

In accordance with the preferred embodiment illustrated in figure 4, the regulation plate 42 is pivoted to the tank 3, preferably to the same lateral wall 33, around a hinging center which preferably coincides with the center of rotation C to which the metering plate 41 is pivoted.

In this manner, the regulation plate 42 is advantageously rotatably connected to the tank 3 around the same first rotation axis R and is movable along a circumferential movement direction thereof with respect to the center of rotation C, preferably along an arc of circumference between the first position and the second position.

In accordance with the aforesaid preferred embodiment the regulation plate 42 is advantageously provided, preferably in a single body, with a lever arm 420 actuatable for moving the regulation plate 42 between the first and the second position.

In the event in which the second movement means 7 are of manual type, the lever arm 420 defines the same second movement means 7, being grippable by a user and actuatable by the latter. In such case, the lever arm 420 is preferably provided with an elongated extension adapted to allow the lever arm 420 to be extended up to a rear wall of the tank 3 in a manner such that it can be easily actuated by a user.

In accordance with such embodiment solution, moreover, the tank 3 is provided, preferably on its rear wall, with a graduated scale 330 with length units, e.g. centimeters, and the lever arm 420 is preferably provided with an indicator, mobile along the graduated scale 330 in order to signal the position of the lever arm 420.

In this manner, the user can view the set curve from outside the tank 3, without having to inspect the dispensing opening 31 and verify which through opening 401, 402 is placed at the dispensing opening 31 itself.

At the same time, the indicator advantageously constitutes a grip that allows a user to actuate the lever arm 420 in order to modify the position of the regulation plate 42 and advantageously selectively block the position thereof during the distribution of the products on the ground. Alternatively, the second movement means 7 can be of automated type, for example comprising a second electric actuator, which is advantageously fixed (or generally connected) to the lever arm 420 so as to automatically actuate it in order to move the regulation plate 42 between the aforesaid first and second positions.

Of course, as is known to the man skilled in the art, the metering plate 41, preferably at the movement portion 412, has a first eyelet, and the movable stem of the actuator 60 is preferably provided with a second eyelet, concentric with respect to the first eyelet.

Advantageously, the first and the second eyelet are connected by means of junction means, in a manner such to allow the mutual rotation of the movement portion 412 with respect to the movable stem of the actuator 60 during the actuation thereof.

Advantageously, the tank 3 is extended with an overturned pyramid frustum form, in particular tapered between an upper end thereof and an opposite lower end.

Preferably, the tank 3 comprises two containing portions, preferably made in a single body, which are side-by-side each other and preferably symmetric.

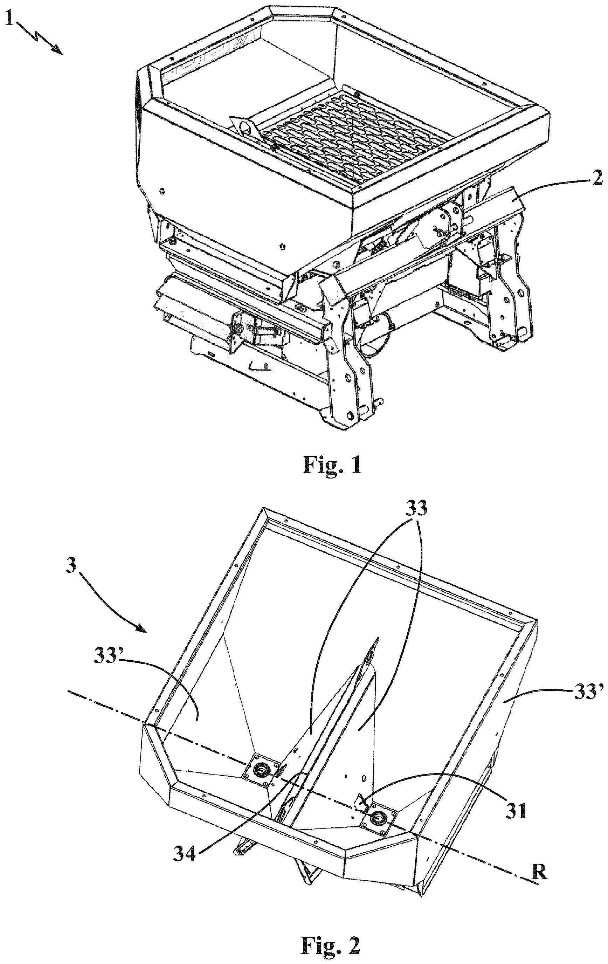

In particular, each containing portion is provided with an overturned pyramid frustum form and is extended between a first lateral wall 33' and a second lateral wall 33", opposite and tilted with respect to the first lateral wall 33'. More in detail, the two containing portions are placed side-by-side each other with the respective second lateral walls 33" facing and in particular which are connected at a common upper edge 34 thereof which is placed within the containment volume of the tank 3, as is visible in figure 1.

Preferably, the two second lateral walls 33" are provided with a height smaller than the first lateral walls 33' such that the tank 3 is provided with a containment volume which is extended between a common upper portion and two separate lower portions, one for each containing portion.

In accordance with such embodiment the tank 3 is provided with two separate dispensing openings 31, one for each containing portion.

In particular, the tank 3 is preferably provided with a right dispensing opening 31 and an opposite left dispensing opening 31, which are preferably made on corresponding second lateral walls 33" of the tank 3. In the same manner, the distribution means 5 advantageously comprise two separate spreader plates 50, each of which placed below a corresponding containing portion.

Of course, without departing from the protective scope of the present invention, the dispensing opening 31 can be made on any other wall of the tank 3, such as for example the bottom of the portions of the tank 3 or the first lateral walls 33'.

In such case, consequently, also the metering plate 41 and the regulation plate 42 will be placed respectively on the bottom of the portions of the tank 3 or on the first lateral walls 33', in order to allow a regulation of the effective flow rate independent of the position of the dispensing opening 31.

Of course in accordance with such embodiment the closure means 4 are also provided with two metering plates 41 and two regulation plates 42, fixed to (or generally mounted on) corresponding containing portions, so as to allow the precise and regulated metering of the product to be distributed by both containing portions of the tank 3.

Preferably, in accordance with such embodiment, the first movement means 6 comprise two distinct actuators 60, each of which mechanically connected to a corresponding metering plate 41 in order to move it along the corresponding movement trajectory S.

Advantageously, the two actuators 60 are independent of each other and, as better described hereinbelow, are actuatable in a different manner in order to allow different dispensing operations from the right dispensing opening 31 and from the left dispensing opening 31 of the two containing portions of the tank 3.

Advantageously the tank 3 comprises at least one housing hole, and preferably a housing hole for each containing portion, which is made passing through the lower wall of the tank 3.

As set forth above, the machinery 1 comprises distribution means 5 provided with a spreader plate 50, which are well known to the man skilled in the art and therefore they will not be described in detail.

More in detail, the spreader plate 50 is provided with at least one spreader blade 501, and preferably two spreader blades 501, fixed on an upper face of the spreader plate 50, directed towards the dispensing opening 31, and in particular the spreader blades 501 are extended from the center of the spreader plate 50 in opposite directions, preferably up to a peripheral edge of the spreader plate 50 itself.

Advantageously, the distribution means 5 also comprise at least one mixer body 51, placed within the tank 3 and comprising a pin 510, rotatably housed, preferably to size by means of suitable bearings, within a corresponding housing hole.

The pin 510 is fixed to the spreader plate 50 in order to be moved together with the latter, which is for example in a per se known manner moved by means of the power takeoff placed to connect between the tank 3 and the drive unit of the machinery 1.

The pin 510 advantageously comprises, at an upper end thereof, an enlarged plate 511 from which preferably at least one tab 512 is projectingly extended, intended to convey the product to dispense towards the dispensing opening 31 during its movement imparted by the spreader plate 50.

Preferably, if the farm machinery 1 is used for spreading seeds, the mixer body 51 will lack tabs 512.

Preferably, the farm machinery 1 is a machinery of electronic type, i.e. preferably automatically drivable by an operator directly from the cabin by means of a user interface (or alternatively by means of a dedicated application and remotely connected to the machinery), as is better explained hereinbelow.

Advantageously, the farm machinery 1 provides that at least the metering plate 41 be movable also during the operation of the machinery itself, in a manner such to repeatedly regulate the position thereof as a function of the variation of the operating parameters (such as for example the speed of the farm machinery).

In particular the metering plate 41 is preferably electronically moved in order to more greatly open the corresponding through opening 401, 402 when the machinery is moved more quickly, and on the contrary more greatly close the corresponding through opening 401, 402 when the machinery is moved more slowly during the dispensing of the treatment product. Of course, without departing from the protective scope of the present invention, the opening of the metering plate 41 can be advantageously regulated even independent of the speed of the farm machinery 1, for example as a function of the particular plot of land that the machinery is treating in a specific instant.

Such solution of improved closure means 4 is indeed particularly advantageous in the case of use on farm machinery 1 of electronic type, since it allows considerably reducing the metering errors due to the continuous movement of the metering plate 41 in the different operating positions during the travel of the farm machinery 1.

Of course, such solution is extremely advantageous also in the case of farm machinery 1 of manual type, since it similarly allows increasing the metering precision even in the event in which it is the operator himself/herself to position the metering plate 41 in a predetermined position.

More in detail, the farm machinery 1 advantageously comprises a logic control unit, electrically connected to the first movement means 6 and arranged for driving the first movement means 6 in order to regulate the opening of the metering plate 41.

In particular, the logic control unit is arranged for moving, by means of the first movement means 6, the metering plate 41 into the different operating positions, preferably as a function of parameters selected for example from among the position of the farm machinery and/or the flow rate of the products dispensed from the dispensing opening 31 and/or the position of the regulation plate 42.

Preferably, the logic control unit is electrically connected also to the second movement means 7 (in the event in which these are of automated type).

Preferably, the logic control unit is electrically connected, in an independent manner, to both actuators 60 of the first movement means 6 in order to drive them independently from each other.

In particular, according to the embodiment in which the containment tank 3 is provided with two dispensing openings 31 and with two metering plates 41, the logic control unit is arranged for driving the first movement means 6 which adjust the opening of the different metering plates 41 in a manner independent from each other, in this manner making possible the simultaneous distribution of two different amounts of product through the two dispensing openings 31 on a same ground or the working of two different terrains that are adjacent to each other.

In particular, according to the aforesaid embodiment it is possible to load one or more prescription maps for the product metering and configure the logic control unit so that it actuates the first movement means 6 connected to the two metering plates 41 according to the aforesaid prescription maps.

In particular, the logic control unit comprises a control panel, preferably installed in a cabin of the farm machinery 1 and configured in order to allow a user to select and set one between the first position and the second position of the regulation plate 42 and preferably an initial operating position of the metering plate 41.

More in detail, by means of the aforesaid control panel the user sets such positions and the logic control unit sends a corresponding electrical signal to the first movement means 6, and preferably also to the second movement means 7, in order to actuate the corresponding actuators to move the metering plate 41, and possibly the regulation plate 42, in order to place it in the desired position.

Advantageously, the logic control unit can also comprise a calculation unit and a memory unit, within which a series of metering programs are stored, comprising for example one or more of the aforesaid prescription maps.

Advantageously, each metering program corresponds to a data set comprising at least one angular position of the metering plate 41 and preferably a position of the regulation plate 42, which depend on the particular product to be distributed (and its physical and chemical characteristics) and on a series of operating parameters such as for example the width and the type of terrain to be treated and the speed of the farm machinery 1.

More in detail, the logic control unit is configured in order to allow the user to set the product to be distributed and the aforesaid operating parameters by means of the control panel and the calculation unit is configured for calculating and selecting, on the basis of the inserted data, the corrected metering program from among those stored in the memory unit.

The logic control unit is finally configured for setting the corresponding positions of the metering plate 41 and of the regulation plate 42 of the corresponding metering program and actuating the corresponding actuators to move the metering plate 41 and the regulation plate 42 in order to place them in the desired positions.

In particular, the farm machinery 1 advantageously comprises a proximity sensor, which is electrically connected and in data communication with the logic control unit, and is operatively associated with the regulation plate 42 in order to detect the position of the latter, identifying which between the two through openings 401, 402 is selected, i.e. is placed at the dispensing opening 31.

Preferably, the proximity sensor is placed at the lever arm 420 of the regulation plate 42 in order to detect the position of the latter with respect to the extension of the graduated scale 330. Advantageously, the proximity sensor is configured for sending, to the logic control unit, a position signal, corresponding to the detected position and hence to the selected through opening.

Of course, without departing from the protective scope of the present invention, the proximity sensor can be placed in any position that allows detecting the difference of positioning of the through openings 401, 402 with respect to the dispensing opening 31.

In this manner, in case of manual movement of the lever arm 420, the logic control unit is capable of identifying which through opening 401, 402 is placed at the dispensing opening 31 and preferably in order to communicate it to the user, for example by means of a visual signal on the control panel.

Advantageously, the logic control unit is also arranged for adjusting the travel of the actuator 60 on the basis of the position signal received.

More in detail, the logic control unit is also arranged for setting the first or the second metering curve C1, C2 on the basis of the position signal received from the proximity sensor, and the travel of the actuator 60 of the first movement means 6 will depend on such curve.

Advantageously, the machinery 1 comprises a GPS device mounted on the support frame 2, electrically connected in data communication with the logic control unit.

More in detail, the GPS device is arranged for detecting the position of the machinery 1 along the path to be completed during the working and for sending to the logic control unit a corresponding position signal, representative of the position of the farm machinery 1.

Advantageously, the logic control unit is arranged for receiving the aforesaid position signal and actuating the first movement means 6 in order to correct, by means of the movement of the metering plate 41, the flow rate of dispensed products traverses the dispensing opening 31 on the basis of the position of the farm machinery 1.

In addition, the machinery 1 advantageously comprises at least one load cell, electrically connected in data communication with the logic control unit and mechanically fixed between the support frame 2 and the connection structure to the drive unit so as to allow calculating, preferably continuously, due to an automatic filtering, the weight of the product within the containment tank 3, as well as its different physical slide characteristics.

More in detail, the load cell is advantageously arranged for generating a flow rate signal, representative of the flow rate of products dispensed from the dispensing opening 31, and sending the aforesaid flow rate signal to the logic control unit.

For example, the aforesaid flow rate signal is generated based on the continuous calculation of the weight difference of the product contained within the containment tank 3.

Advantageously, the logic control unit is arranged for receiving the aforesaid flow rate signal and actuating the first movement means 6 in order to correct, by means of the movement of the metering plate 41, the flow rate of products dispensed through the dispensing opening 31.

In this manner, the logic control unit, to which the load cell is connected, measures the quantity of product exiting from the containment tank 3 and is capable of verifying and if necessary regulating the metering automatically, in particular by modifying the position of the metering plate 41 by means of the first electric actuator 60.

In particular, in the event in which the load cell detected a flow rate smaller than that objective, the logic control unit would drive first movement means 6 to move the metering plate 41 in order to more greatly open the dispensing opening 31.

On the contrary, in the event in which the load cell detected a flow rate greater than the objective rate, the logic control unit would drive the first movement means 6 to move the metering plate 41 in order to partially close the dispensing opening 31.

In particular, the weighing cells, due to the aforesaid automatic filtering, calculate the different slide characteristics of the composts with the maximum precision and reliability even during movement.

In addition, the machinery 1 described herein can be provided with the ISOBUS technology, i.e. with a communication technological standard that is based on the ISO 11783 standard, due to which, with a single display, all the compatible ISOBUS devices connected thereto are driven from the cabin.

Due to such characteristic, the machinery 1, object of the invention, is capable of automatically managing, for example by means of prescription maps, the dose of product to be distributed on the ground.

In addition, as set forth above, the compost spreader, object of the invention, allows automatically adjusting the opening of the metering plate 41 as a function of the advancing speed of the machinery 1 (DPAE), which can be detected by means of the GPS device or detection directly by the kilometer counter of the drive unit, and of the actual slide characteristics of the products used in fertilizing.

Therefore, even changing the advancing speed, the preselected dose remains substantially constant.

Also forming the object of the present invention is a method for operating farm machinery 1 of the above-described type, regarding which the reference numbers will be maintained for the sake of description simplicity.

The aforesaid method preferably comprises a preliminary step in which a user, by means of an application installed on an electronic device, for example a smartphone, in data communication with the logic control unit of the farm machinery 1, selects the model of farm machinery that he/she intends to employ (which for example will vary regarding size, flow rate of the mounted containment tank etc.).

In accordance with the idea underlying the present invention, the method comprises a selection step, in which at least the product to be distributed on the ground is selected.

In particular, such selection step provides that the user sets, by means of the aforesaid control panel, the product to be distributed, or alternatively the physical characteristics of the product to be distributed such as density, shape factor, recommended metering etc.

Alternatively, if the physical characteristics of the product are unknown, the user executes a preliminary analysis, for example by means of a granulometric box and then selects, through the aforesaid device, a product having characteristics similar to that to be distributed.

Preferably, in such selection step the user also sets at least one operating parameter for distribution selected from among: the work width, the type of ground to be treated, the average speed of the farm machinery, the quantity to be dispensed, preferably expressed in kg/ha.

The method also comprises a calculation step, in which the logic control unit verifies the correctness of the parameters inserted by the user, and calculates, based on the product to be distributed, at least the initial operating position of the metering plate 41 along the movement trajectory S in a manner such to dispense the flow rate of selected product.

In particular, such operation is preferably attained by means of the calculation unit and still more preferably such calculation step also accounts for the operating parameters that were set above.

Preferably, moreover, the calculation unit provides the user with additional information relative to the optimization of further operating parameters of the farm machinery, such as for example the positions of the fall point of the product on the spreader plates 50 and on the relative spreader blades 501, the speed of the power takeoff expressed in revolutions/minute, and the position of regulation means (not represented in the enclosed figures) in order to set the work width, e.g. in row cultivations.

The method also comprises a selection step, in which the logic control unit selects which among the through openings 401, 402 to set based on the flow rate of product to be dispensed.

In particular, for reduced flow rates to be dispensed, the second through opening 402 will preferably be selected while for greater flow rates the first through opening 401 will be selected. The method also comprises a setting step, in which the selected through opening 401, 402 is set by moving the regulation plate 42, by means of preferably the second movement means 7, in one between the first and the second position, based on the flow rate of product to be dispensed. More in detail, the user manually sets the regulation plate 42 at the correct through opening 401, 402 as a function of the selection communicated by the logic control unit, in particular regulating the position of the lever arm 420 along the graduated scale 330.

Of course, alternatively, such setting can be automatically made in the event in which the machinery 1 comprises a second actuator connected to the regulation plate 42.

Preferably in addition, as stated above, the logic control unit detects, by means of the proximity sensor, the position of the regulation plate 42 in order to calculate, on the basis of the detected position (and hence of the metering curve set by the user) the movement of the metering plate 41 along the different operating positions as a function of the variation of the above-described operating parameters.

Indeed, the metering plate 41 is of course moved by a travel that is a function of the particular preset metering curve since the particular metering curve corresponds with a specific through opening 401, 402.

Advantageously, following the setting step, the user starts the machinery 1 in order to start following the programmed path and spread the product to be distributed along this.

Advantageously, during the movement of the machinery the method provides for a plurality of regulation steps in which the logic control unit moves the metering plate 41, placing it in different operating positions (which define different passage sections of different dimensions) as a function of the aforesaid operating parameters and/or as a function of one or more between the position of the farm machinery, the flow rate signal detected by the load cell or the position signal detected by the proximity sensor.

In particular, in the aforesaid regulation steps, the logic control unit drives the actuation of the actuator 60 for moving the metering plate 41 into the correct position and dispense the correct product flow rate as a function of the variation of several operating parameters, such as for example the advancing speed of the machinery 1, the position on the field, the pre-established dose in a specific position of the metering plate 41 etc.

The invention thus conceived therefore attains the pre-established objects.

## Claims

1. Farm machinery for distributing treatment products on the ground, which comprises:
- a support frame (2);
- at least one tank (3), fixed to said support frame (2) and adapted to contain products to be distributed on the ground, said tank (3) being provided with at least one dispensing opening (31) of said products to be distributed;
- distribution means (5), mechanically connected to said support frame (2), placed below the dispensing opening (31) of said tank (3) and comprising at least one spreader plate (50) which is intended to receive the dose of said products from said tank (3) and is actuatable to rotate in order to distribute said dose of products on said ground;
- closure means (4), mechanically connected to the external surface of said tank (3) at said dispensing opening (31) and comprising at least one metering plate (41), which is provided with a perimeter edge having at least one shaped section and is movable, along a movement trajectory (S), at least between multiple different operating positions in which it is placed with said shaped section to at least partially close said dispensing opening (31), in order to allow the dispensing of corresponding predetermined doses of said products from said tank (3);
wherein said closure means (4) comprise at least one regulation plate (42), which is interposed between said metering plate (41) and said tank (3), is mechanically connected to the latter, is provided with at least one first through opening (401) and with at least one second through opening (402) and said regulation plate (42) is movable between at least:
- one first position, in which said first through opening (401) is placed at the dispensing opening (31) of said tank (3) and the shaped section of said metering plate (41) is placed at least to partially close said first through opening (401); and
- one second position, in which said second through opening (402) is placed at the dispensing opening (31) of said tank (3), and the shaped section of said metering plate (41) is placed to at least partially close said second through opening (402).

2. Farm machinery according to claim 1, **characterized in that** said first through opening (401) is extended with a first component (Y), which is extended orthogonal to said movement trajectory (S), and with a second component (X), which is extended parallel to said movement trajectory (S), and said second through opening (402) is extended with a third component (Y'), which is extended orthogonal to said movement trajectory (S), and with a fourth component (X'), which is extended parallel to said movement trajectory (S);
the ratio between said fourth component (X') and said third component (Y') of said second through opening (402) being greater than the ratio between said second component (Y) and said first component (X) of said first through opening (401).

3. Farm machinery according to claim 1 or 2, **characterized in that** said metering plate (41) is pivoted around a center of rotation (C) to said tank (3) and is rotatably connected to the latter around a first rotation axis (R), said movement trajectory (S) circumferentially extended with respect to said center of rotation (C).

4. Farm machinery according to any one of the preceding claims, **characterized in that** said first through opening (401) defines a first passage section for the outflow of said products from said tank (3) and that said second through opening (402) defines a second passage section for the outflow of said products from said tank (3);
said second passage section being smaller than said first passage section.

5. Farm machinery according to claim 2, **characterized in that** said second through opening (402) is extended for a first section, provided with a main extension along said third component (Y'), and for a second section, transverse with respect to said first section and provided with a main extension along said fourth component (X').

6. Farm machinery according to any one of the preceding claims, **characterized in that** it comprises first movement means (6) mechanically connected to said metering plate (41), in order to move said metering plate (41) along said movement trajectory (S).

7. Farm machinery according to claim 6, **characterized in that** said metering plate (41) comprise a closure portion (411) and a movement portion (412), placed opposite said closure portion (411) with respect to said center of rotation (C);
said movement portion (412) being fixed to said first movement means (6) in order to allow the movement of said metering plate (41) along said movement trajectory (S).

8. Farm machinery according to claim 6 or 7, **characterized in that** it comprises a logic control unit, electrically connected to said first movement means (6) and arranged for driving the latter to regulate the opening of said first metering plate (41).

9. Farm machinery according to claim 8, **characterized in that** it comprises a GPS device, electrically connected and in data communication with said logic control unit;
said GPS device being arranged for detecting the position of said farm machinery along a path to be completed during working and sending a corresponding position signal, representative of the position of said farm machinery to said logic control unit;
said logic control unit being arranged for receiving said position signal and actuating said first movement means (6) in order to correct the flow rate of products dispensed from said dispensing opening (31) on the basis of the position of said farm machinery.

10. Farm machinery according to claim 8 or 9, **characterized in that** it comprises at least one load cell, electrically connected and in data communication with said logic control unit and arranged for generating a flow rate signal, representative of the flow rate of products dispensed from said dispensing opening (31) and sending said flow rate signal to said logic control unit; said logic control unit being arranged for receiving said flow rate signal and actuating said first movement means (6) in order to correct the flow rate of products dispensed from said dispensing opening (31).

11. Farm machinery according to any one of the claims from 8 to 10, **characterized in that** it comprises a proximity sensor which is electrically connected and in data communication with said logic control unit, is operatively associated with said regulation plate (42), is arranged for detecting the position of the latter, identifying which of said two through openings (401, 402) is placed at said dispensing opening (31), and sending, to said logic control unit, a position signal corresponding to said detected position;
said first movement means (6) comprising at least one actuator (60) mechanically connected to said metering plate (41);
said logic control unit being arranged for regulating the travel of said actuator (60) based on said position signal received.

12. Method for operating a farm machinery according to any one of the preceding claims for distributing products for treating a terrain, wherein the method provides for:
- a selection step, in which at least one product to be distributed is selected;
- a calculation step, in which, on the basis of said product to be distributed, at least the initial position of said metering plate (41) is calculated along said movement trajectory (S);
- a selection step, in which one of said two through openings (401, 402) is selected on the basis of said flow rate of product to be dispensed;
- a setting step, in which said selected through opening (401, 402) is set by moving said regulation plate (42) into one from between said first position and said second position, on the basis of said flow rate of product to be dispensed.

## Patentansprüche

1. Landwirtschaftliche Maschine zum Verteilen von Behandlungsprodukten auf dem Boden, die Folgendes umfasst:
- einen Tragrahmen (2);
- mindestens einen Behälter (3), der an dem genannten Tragrahmen (2) befestigt und geeignet ist, auf dem Boden zu verteilende Produkte zu enthalten, wobei der genannte Behälter (3) mit mindestens einer Ausgabeöffnung (31) für die genannten zu verteilenden Produkte ausgestattet ist;
- Verteilungselemente (5), die mechanisch mit dem genannten Tragrahmen (2) verbunden, unterhalb der Ausgabeöffnung (31) des genannten Behälters (3) positioniert sind und mindestens eine Streuerplatte (50) umfassen, die dazu bestimmt ist, die Dosis der genannten Produkte aus dem genannten Behälter (3) zu erhalten und in Drehung versetzt werden kann, um die genannte Dosis von Produkten auf dem genannten Boden zu verteilen;
- Schließelemente (4), die an der genannten Ausgabeöffnung (31) mechanisch mit der Außenfläche des genannten Behälters (3) verbunden sind und mindestens eine Dosierplatte (41) umfassen, die mit einem umlaufenden Rand ausgestattet ist, der mindestens einen profilierten Abschnitt aufweist, und, entlang einer Versetzungsbahn (S), mindestens zwischen mehreren verschiedenen Arbeitspositionen beweglich ist, in denen sie mit dem genannten profilierten Abschnitt die genannte Ausgabeöffnung (31) mindestens teilweise verschließend positioniert ist, um die Ausgabe von entsprechenden vorgegebenen Dosen der genannten Produkte aus dem genannten Behälter (3) zu gestatten;
wobei die genannten Schließelemente (4) mindestens eine Einstellplatte (42) umfassen, die zwischen der genannten Dosierplatte (41) und dem genannten Behälter (3) eingefügt ist, mechanisch mit Letzterem verbunden ist, mit mindestens einer ersten durchgehenden Öffnung (401) und mindestens einer zweiten durchgehenden Öffnung (402) ausgestattet ist, wobei die genannte Einstellplatte (42) zwischen mindestens Folgendem beweglich ist:
- einer ersten Position, in der die genannte erste durchgehende Öffnung (401) an der Ausgabeöffnung (31) des genannten Behälters (3) positioniert ist und der profilierte Abschnitt der genannten Dosierplatte (41) die genannte erste durchgehende Öffnung (401) mindestens teilweise verschließend positioniert ist; und
- einer zweiten Position, in der die genannte zweite durchgehende Öffnung (402) an der Ausgabeöffnung (31) des genannten Behälters (3) positioniert ist und der profilierte Abschnitt der genannten Dosierplatte (41) die genannte zweite durchgehende Öffnung (402) mindestens teilweise verschließend positioniert ist.

2. Landwirtschaftliche Maschine nach Anspruch 1, **dadurch gekennzeichnet, dass** die genannte erste Durchgangsöffnung (401) mit einer ersten Komponente (Y) verläuft, die im Verhältnis zu der genannten Versetzungsbahn (S) orthogonal verläuft, und mit einer zweiten Komponente (X), die im Verhältnis zu der genannten Versetzungsbahn (S) parallel verläuft, und dass die genannte zweite durchgehende Öffnung (402) mit einer dritten Komponente (Y') verläuft, die im Verhältnis zu der genannten Versetzungsbahn (S) orthogonal verläuft, und mit einer vierten Komponente (X'), die im Verhältnis zu der genannten Versetzungsbahn (S) parallel verläuft; wobei das Verhältnis zwischen der genannten vierten Komponente (X') und der genannten dritten Komponente (Y') der genannten zweiten durchgehenden Öffnung (402) im Vergleich zu dem Verhältnis zwischen der genannten zweiten Komponente (Y) und der genannten ersten Komponente (X) der genannten ersten durchgehenden Öffnung (401) größer ist.

3. Landwirtschaftliche Maschine nach Anspruch 1 oder 2, **dadurch gekennzeichnet, dass** die genannte Dosierplatte (41) um einen Rotationsmittelpunkt (C) an dem genannten Behälter (3) schwenkbar ist und drehbar mit Letzterem um eine erste Drehachse (R) verbunden ist, wobei die genannte Versetzungsbahn (S) im Verhältnis zu dem genannten Rotationsmittelpunkt (C) umlaufend verläuft.

4. Landwirtschaftliche Maschine nach einem beliebigen der vorangegangenen Ansprüche, **dadurch gekennzeichnet, dass** die genannte erste durchgehende Öffnung (401) einen ersten Durchgangsquerschnitt zum Austreten der genannten Produkte aus dem genannten Behälter (3) definiert und dass die genannte zweite durchgehende Öffnung (402) einen zweiten Durchgangsquerschnitt zum Austreten der genannten Produkte aus dem genannten Behälter (3) definiert;
wobei der genannte zweite Durchgangsquerschnitt im Vergleich zu dem genannten ersten Durchgangsquerschnitt kleiner ist.

5. Landwirtschaftliche Maschine nach Anspruch 2, **dadurch gekennzeichnet, dass** die genannte zweite durchgehende Öffnung (402) auf einem ersten Abschnitt verläuft, der mit einem vorherrschenden Verlauf entlang der genannten dritten Komponente (Y') versehen ist, und auf einem im Verhältnis zu dem genannten ersten Abschnitt quer liegenden zweiten Abschnitt, der mit einem vorherrschenden Verlauf entlang der genannten vierten Komponente (X') versehen ist.

6. Landwirtschaftliche Maschine nach einem beliebigen der vorangegangenen Ansprüche, **dadurch gekennzeichnet, dass** sie mechanisch mit der genannten Dosierplatte (41) verbundene erste Bewegungselemente (6) umfasst, um die genannte Dosierplatte (41) entlang der genannten Versetzungsbahn (S) zu bewegen.

7. Landwirtschaftliche Maschine nach Anspruch 6, **dadurch gekennzeichnet, dass** die genannte Dosierplatte (41) einen Schließabschnitt (411) und einen Bewegungsabschnitt (412), der dem genannten Schließabschnitt (411) im Verhältnis zu dem genannten Rotationsmittelpunkt (C) gegenüberliegend angeordnet ist, umfasst;
wobei der genannte Bewegungsabschnitt (412) an den genannten ersten Bewegungselementen (6) befestigt ist, um die Bewegung der genannten Dosierplatte (41) entlang der genannten Versetzungsbahn (S) zu gestatten.

8. Landwirtschaftliche Maschine nach Anspruch 6 oder 7, **dadurch gekennzeichnet, dass** sie eine logische Steuerung umfasst, die elektrisch an die genannten ersten Bewegungselemente (6) angeschlossen ist und darauf ausgelegt ist, Letztere anzusteuern, um das Öffnen der genannten ersten Dosierplatte (41) zu regulieren.

9. Landwirtschaftliche Maschine nach Anspruch 8, **dadurch gekennzeichnet, dass** sie ein elektrisch an die genannte logische Steuerung angeschlossenes und im Datenaustausch mit dieser stehendes GPS-Gerät umfasst;
wobei das genannte GPS-Gerät darauf ausgelegt ist, die Position der genannten landwirtschaftlichen Maschine entlang einer Strecke zu erfassen, die während der Arbeit zurückzulegen ist, und ein entsprechendes Positionssignal, das die Position der genannten landwirtschaftlichen Maschine darstellt, an die genannte logische Steuerung zu senden;
wobei die genannte logische Steuerung darauf ausgelegt ist, das genannte Positionssignal zu empfangen und die genannten ersten Bewegungselemente (6) zu betätigen, um den Durchsatz der von der genannten Ausgabeöffnung (31) basierend auf der Position der genannten landwirtschaftlichen Maschine ausgegebenen Produkte zu korrigieren.

10. Landwirtschaftliche Maschine nach Anspruch 8 oder 9, **dadurch gekennzeichnet, dass** sie mindestens eine Wägezelle umfasst, die elektrisch an die genannte logische Steuerung angeschlossen ist und mit dieser im Datenaustausch steht und darauf ausgelegt ist, ein Durchsatzsignal, das den Durchsatz der von der genannten Ausgabeöffnung (31) ausgegebenen Produkte darstellt, zu erzeugen und das genannte Durchsatzsignal an die genannte logische Steuerung zu senden;
wobei die genannte logische Steuerung darauf ausgelegt ist, das genannte Durchsatzsignal zu empfangen und die genannten ersten Bewegungselemente (6) zu betätigen, um den Durchsatz der von der genannten Ausgabeöffnung (31) ausgegebenen Produkte zu korrigieren.

11. Landwirtschaftliche Maschine nach einem beliebigen der Ansprüche 8 bis 10, **dadurch gekennzeichnet, dass** sie einen Näherungssensor umfasst, der elektrisch an die genannte logische Steuerung angeschlossen ist und mit dieser im Datenaustausch steht, operativ mit der genannten Einstellplatte (42) verbunden, darauf ausgelegt ist, die Position Letzterer zu erkennen und so festzustellen, welche der genannten beiden durchgehenden Öffnungen (401, 402) an der genannten Ausgabeöffnung (31) positioniert ist und an die genannte logische Steuerung ein Positionssignal zu senden, das der genannten erfassten Position entspricht;
wobei die genannten Bewegungselemente (6) mindestens einen mechanisch mit der genannten Dosierplatte (41) verbundenen Stellantrieb (60) umfassen;
wobei die genannte logische Steuerung darauf ausgelegt ist, den Hub des genannten Stellantriebs (60) abhängig von dem empfangenen genannten Positionssignal zu regulieren.

12. Betriebsverfahren einer landwirtschaftlichen Maschine nach einem beliebigen der vorangegangenen Ansprüche für die Verteilung von Produkten zur Behandlung eines Bodens, wobei das Verfahren Folgendes vorsieht:
- einen Auswahlschritt, bei dem mindestens ein zu verteilendes Produkt ausgewählt wird;
- einen Berechnungsschritt, bei dem abhängig von dem zu verteilenden Produkt mindestens eine Ausgangsposition der genannten Dosierplatte (41) entlang der genannten Versetzungsbahn (S) berechnet wird;
- einen Auswahlschritt, bei dem eine unter den beiden durchgehenden Öffnungen (401, 402) abhängig von dem genannten Durchsatz des auszugebenden Produkts ausgewählt wird;
- einen Einstellschritt, bei dem die ausgewählte genannte durchgehende Öffnung (401, 402) eingestellt wird, indem die genannte Einstellplatte (42) abhängig von dem genannten Durchsatz auszugebenden Produkts in eine unter der genannten ersten Position und der genannten zweiten Position bewegt wird.

## Revendications

1. Machine agricole pour distribuer des produits de traitement sur un terrain, qui comprend :
- un châssis de support (2) ;
- au moins une cuve (3), fixée audit châssis de support (2) et apte à contenir des produits devant être distribués sur le terrain, ladite cuve (3) étant munie d'au moins une ouverture de délivrance (31) desdits produits devant être distribués ;
- des moyens de distribution (5), reliés mécaniquement audit châssis de support (2), placés en-dessous de l'ouverture de délivrance (31) de ladite cuve (3) et comprenant au moins un plat d'épandage (50) qui est destiné à recevoir la dose desdits produits de ladite cuve (3) et peut être entraîné en rotation pour distribuer ladite dose de produits sur ledit terrain ;
- des moyens de fermeture (4), reliés mécaniquement à la surface extérieure de ladite cuve (3) au niveau de ladite ouverture de délivrance (31) et comprenant au moins une plaque de dosage (41), qui est munie d'un bord périphérique ayant au moins un tronçon profilé et est mobile, le long d'une trajectoire de déplacement (S), au moins parmi plusieurs positions opérationnelles différentes dans lesquelles elle est placée avec ledit tronçon profilé pour fermer au moins partiellement ladite ouverture de délivrance (31), afin de permettre la délivrance de doses prédéterminées correspondantes desdits produits de ladite cuve (3) ;
dans laquelle lesdits moyens de fermeture (4) comprennent au moins une plaque régulatrice (42), qui est interposée entre ladite plaque de dosage (41) et ladite cuve (3), est reliée mécaniquement à celle-ci, est munie d'au moins une première ouverture traversante (401) et d'au moins une seconde ouverture traversante (402), et ladite plaque régulatrice (42) est mobile entre au moins :
- une première position, dans laquelle ladite première ouverture traversante (401) est placée au niveau de l'ouverture de délivrance (31) de ladite cuve (3) et le tronçon profilé de ladite plaque de dosage (41) est placé pour fermer au moins partiellement ladite première ouverture traversante (401) ; et
- une seconde position, dans laquelle ladite seconde ouverture traversante (402) est placée au niveau de l'ouverture de délivrance (31) de ladite cuve (3), et le tronçon profilé de ladite plaque de dosage (41) est placé pour fermer au moins partiellement ladite seconde ouverture traversante (402).

2. Machine agricole selon la revendication 1, **caractérisée en ce que** ladite première ouverture traversante (401) se développe avec une première composante (Y) qui s'étend orthogonalement à ladite trajectoire de déplacement (S), et avec une seconde composante (X), qui s'étend parallèlement à ladite trajectoire de déplacement (S), et ladite seconde ouverture traversante (402) se développe avec une troisième composante (Y'), qui s'étend orthogonalement à ladite trajectoire de déplacement (S), et avec une quatrième composante (X'), qui s'étend parallèlement à ladite trajectoire de déplacement (S) ;
le rapport entre ladite quatrième composante (X') et ladite troisième composante (Y') de ladite seconde ouverture traversante (402) étant supérieur au rapport entre ladite seconde composante (Y) et ladite première composante (X) de ladite première ouverture traversante (401).

3. Machine agricole selon la revendication 1 ou 2, **caractérisée en ce que** ladite plaque de dosage (41) est montée pivotante autour d'un centre de rotation (C) à ladite cuve (3) et est reliée de manière rotative à celle-ci autour d'un premier axe de rotation (R), ladite trajectoire de déplacement (S) se développant circonférentiellement par rapport audit centre de rotation (C).

4. Machine agricole selon l'une quelconque des revendications précédentes, **caractérisée en ce que** ladite première ouverture traversante (401) définit une première section de passage pour la sortie desdits produits de ladite cuve (3) et que ladite seconde ouverture traversante (402) définit une seconde section de passage pour la sortie desdits produits de ladite cuve (3) ;
ladite seconde section de passage étant plus petite que ladite première section de passage.

5. Machine agricole selon la revendication 2, **caractérisée en ce que** ladite seconde ouverture traversante (402) s'étend sur un premier tronçon, muni d'un développement principal le long de ladite troisième composante (Y'), et sur un second tronçon, transversal par rapport audit premier tronçon et muni d'un développement principal le long de ladite quatrième composante (X').

6. Machine agricole selon l'une quelconque des revendications précédentes, **caractérisée en ce qu'**elle comprend des premiers moyens de déplacement (6) reliés mécaniquement à ladite plaque de dosage (41) pour déplacer ladite plaque de dosage (41) le long de ladite trajectoire de déplacement (S).

7. Machine agricole selon la revendication 6, **caractérisée en ce que** ladite plaque de dosage (41) comprend une portion de fermeture (411) et une portion de déplacement (412), disposée du côté opposé à ladite portion de fermeture (411) par rapport audit centre de rotation (C) ;
ladite portion de déplacement (412) étant fixée auxdits premiers moyens de déplacement (6) pour permettre le déplacement de ladite plaque de dosage (41) le long de ladite trajectoire de déplacement (S).

8. Machine agricole selon la revendication 6 ou 7, **caractérisée en ce qu'**elle comprend une unité de commande logique, reliée électriquement auxdits premiers moyens de déplacement (6) et prédisposée pour commander ceux-ci afin de régler l'ouverture de ladite première plaque de dosage (41).

9. Machine agricole selon la revendication 8, **caractérisée en ce qu'**elle comprend un dispositif GPS, relié électriquement et en communication de données avec ladite unité de commande logique ;
ledit dispositif GPS étant prédisposé pour détecter la position de ladite machine agricole le long d'un parcours à achever pendant la culture et envoyer un signal de position correspondant, représentatif de la position de ladite machine agricole à ladite unité de commande logique ;
ladite unité de commande logique étant prédisposée pour recevoir ledit signal de position et entraîner lesdits premiers moyens de déplacement (6) pour corriger le débit des produits délivrés par ladite ouverture de délivrance (31) sur la base de la position de ladite machine agricole.

10. Machine agricole selon la revendication 8 ou 9, **caractérisée en ce qu'**elle comprend au moins une cellule de charge, reliée électriquement et en communication de données avec ladite unité de commande logique et prédisposée pour générer un signal de débit, représentatif du débit des produits délivrés par ladite ouverture de délivrance (31) et envoyer ledit signal de débit à ladite unité de commande logique ;
ladite unité de commande logique étant prédisposée pour recevoir ledit signal de débit et entraîner lesdits premiers moyens de déplacement (6) pour corriger le débit de produits délivrés par ladite ouverture de délivrance (31).

11. Machine agricole selon l'une quelconque des revendications 8 à 10, **caractérisée en ce qu'**elle comprend un capteur de proximité qui est relié électriquement et en communication de données avec ladite unité de commande logique, est associé opérationnellement à ladite plaque régulatrice (42), est prédisposé pour détecter la position de celle-ci en identifiant celle desdites deux ouvertures traversantes (401, 402) qui est placée au niveau de ladite ouverture de délivrance (31), et pour envoyer à ladite unité de commande logique un signal de position, correspondant à ladite position détectée ;
lesdits premiers moyens de déplacement (6) comprenant au moins un actionneur (60) relié mécaniquement à ladite plaque de dosage (41) ;
ladite unité de commande logique étant prédisposée pour régler la course dudit actionneur (60) sur la base dudit signal de position reçu.

12. Procédé de fonctionnement d'une machine agricole selon l'une quelconque des revendications précédentes pour la distribution de produits pour le traitement d'un terrain, dans lequel le procédé prévoit :
- une étape de sélection, dans laquelle au moins un produit devant être distribué est sélectionné
- une étape de calcul, dans laquelle au moins la position initiale de ladite plaque de dosage (41) est calculée, sur la base dudit produit devant être distribué, le long de ladite trajectoire de déplacement (S) ;
- une étape de sélection, dans laquelle l'une desdites deux ouvertures traversantes (401, 402) est sélectionnée sur la base dudit débit de produit devant être délivré ;
- une étape de réglage, dans laquelle ladite ouverture traversante (401, 402), sélectionnée en déplaçant ladite plaque régulatrice (42) dans l'une de ladite première position et de ladite seconde position, est réglée sur la base dudit débit de produit devant être délivré.
